# EUROPEAN PATENT SPECIFICATION

(11) **EP 1 570 966 B1**
(45) Date of publication and mention of the grant of the patent: **02.01.2008**
(21) Application number: 05251153.2
(22) Date of filing: 26.02.2005
(51) Int. Cl.: B27F 5/10

(54) **Mortiser tool**
Zapfenlochwerkzeug
Outil à mortaiser

(30) Priority: 04.03.2004 GB 0404956
(43) Date of publication of application: 07.09.2005
(73) Proprietor: Buckman, Stuart, Rottingdean, Sussex BN2 7DN (GB)
(72) Inventor: Buckman, Stuart, Rottingdean, Sussex BN2 7DN (GB)
(74) Representative: Bridge-Butler, Alan James

(56) References cited:
- FR-A- 2 649 029
- US-A- 2 015 686
- US-A- 2 996 090

## Description

This invention relates to a mortiser tool, for use particularly, but not exclusively as a hand-held device.

A mortiser is a tool which is used to create troughs, slots or openings in subject materials, for example wood, plaster, brickwork or any other material, to receive fittings or structural components. For example such tools are used to create lock mortises on wooden doors.

One particular mortiser tool comprises a rotating drill bit, the tip of which is surrounded by a non-rotating cutting element. The end, or face, of the cutting element is commonly square, with recesses along each side, such that four points are formed by the corners. The cutting element works by being driven into the material being cut, and serves to square-off the circular hole cut by the drill bit. This kind of mortiser tool is very effective, and can cut a regular square shaped trough.

Mortiser tools as described above are only used with fixed, non-portable machines, because a large force is sometimes required to force the cutting element into the subject material. Commonly the mortiser tool is vertically mounted, and a weight is used to push the tool into the subject material.

However, in many cases subject materials are cut on site, where only hand-held tools are available, for example when a new door is fitted with a lock mortise. In these circumstances the superior cutting effect of the above described mortiser tool is not available.

US 2015686 in the name of McMAHON, and US 2996090 in the name of SMITH, disclose mortiser fittings which can be mounted to hand held drills. The fittings comprise a drill bit for attachment to a drill, and are provided with a transmission unit which converts the rotation of the drill bit into a driving action for an associated cutting element. However, these devices are not effective because the available power is divided between the rotation of the drill bit and the driving of the cutting element.

The present invention is intended to overcome some of the above problems.

According to the present invention a mortiser tool comprises a drill bit, a cutting element mounted around the drill bit and motor means, in which in use the motor means rotates the drill bit Independently of the cutting element, in which the cutting element is axially movable In relation to the drill bit, characterised in that: In use the motor means moves the drill bit in a first reciprocating action, in which the drill bit is provided with transmission means adapted to axially move the cutting element in a second reciprocating action in use, which second reciprocating action is axially non-synchronous with the first reciprocating action.

In a preferred construction the motor means can be a hammer drill, and the drill bit can be mounted on the hammer drill such that the first reciprocating action is the reciprocating action of the hammer drill.

The transmission means can comprise first flange means at a first end of the drill bit, and second flange means at a second end of the drill bit. The cutting element can be disposed between the first flange means and the second flange means, and the first flange means and the second flange means can be spaced apart a distance equivalent to the length of the cutting element plus a pre-determined clearance distance. Therefore, in use when the drill bit is moved in the first reciprocating action by the hammer drill, the cutting element is struck by the first flange means and the second flange means and moved axially back and forth non-synchronously with the drill bit.

In the above described arrangement the drill bit and the cutting element move back and forth non-synchronously. First the drill bit moves forward, then the first flange means hits the cutting element, moving it forward, then the drill bit moves backward, while the cutting element is moving forward, until the second flange means hits the cutting element and sends it backward again. It has been found that this arrangement produces an effective cutting action.

Preferably the cutting element can comprise a sleeve, a handle extending from the sleeve, and a cutting face at the end of the sleeve. In one construction the sleeve can comprise a first body portion, from which the handle can extend In a radial direction, and a square shaped arm extending axially from the first body portion, which can have the cutting face at its end. The arm can be provided with an opening on at least one side, through which cut material can be ejected from the drill bit in use.

The first flange means can comprise a second body portion mounted on the drill bit, which can strike the first body portion in use. In a preferred construction the first and the second body portions can be cylindrical in shape. The second flange means can comprise the tip of the drill bit, which can be provided with a larger radius than the inner dimensions of a portion of the arm behind the cutting face.

The cutting face can be a square shape, in which each side is provided with a recess, such that four points are formed by the corners of the square shape. A cutting element with this type of construction at its tip is commonly referred to as a mortiser chisel, and therefore the arm of the cutting element can be a mortiser chisel of a known type. The arm can be tapered on its inner surface adjacent the cutting face, such that material cut by the four points is forced down the arm, eventually to be ejected through the opening.

In a preferred construction, the mortiser tool can be used with a motor means comprising a hand-held hammer drill, of any known type.

It will be appreciated that the above described mortiser tool includes motor means in its construction. However the invention can also include a mortiser fitting with all the above described features, but which does not include motor means, rather it can have attachment means to attach to a motor means, preferably in the form of a hand-held drill.

As described above, US 2015686 McMAHON and US 2996090 SMITH disclose mortiser fittings comprising a drill bit with a transmission unit adapted to convert the rotational movement of the drill bit into a driving action for an associated cutting element. Therefore, a mortiser fitting comprising a drill bit which is theoretically capable of being attached to a hammer drill and driven in a first reciprocating action, and which has a "transmission means" adapted to axially move the cutting element In a second reciprocating action is known, although the use of the known fittings In this way is not disclosed by the prior art. However, these earlier devices use the rotation of the drill bit to move the cutting element in a reciprocating action, which is not effective because the available power is divided between the rotation of the drill bit and the driving of the cutting element.

Therefore, the invention also includes a mortiser fitting for a motorised drill, comprising a drill bit, a cutting element mounted around the drill bit and attachment means adapted to attach the mortiser fitting to a motorised hammer drill, in which the drill bit is rotatable independently of the cutting element by a motorised hammer drill, in which the drill bit is movable in a first reciprocating action by the reciprocating action of a motorised hammer drill, in which the cutting element Is axially movable in relation to the drill bit, in which the drill bit is provided with transmission means adapted to axially move the cutting element in a second reciprocating action characterised In that: the transmission means comprises first flange means at a first end of the drill bit, and second flange means at a second end of the drill bit, In which the cutting element is disposed between the first flange means and the second flange means, in which the first flange means and the second flange means are spaced apart a distance equivalent to the length of the cutting element and a clearance distance, such that when the drill bit is moved in the first reciprocating action by a motorised hammer drill, the cutting element is struck by the first flange means and the second flange means and moved axially back and forth non-synchronously with the drill bit.

The invention can be performed in various ways, but one embodiment will now be described by way of example and with reference to the accompany drawings in which:
Figure 1 is a side view of a mortiser fitting according to the present invention; and,
Figure 2 is a diagrammatic view of the cutting end of the mortiser fitting as shown in Figure 1.

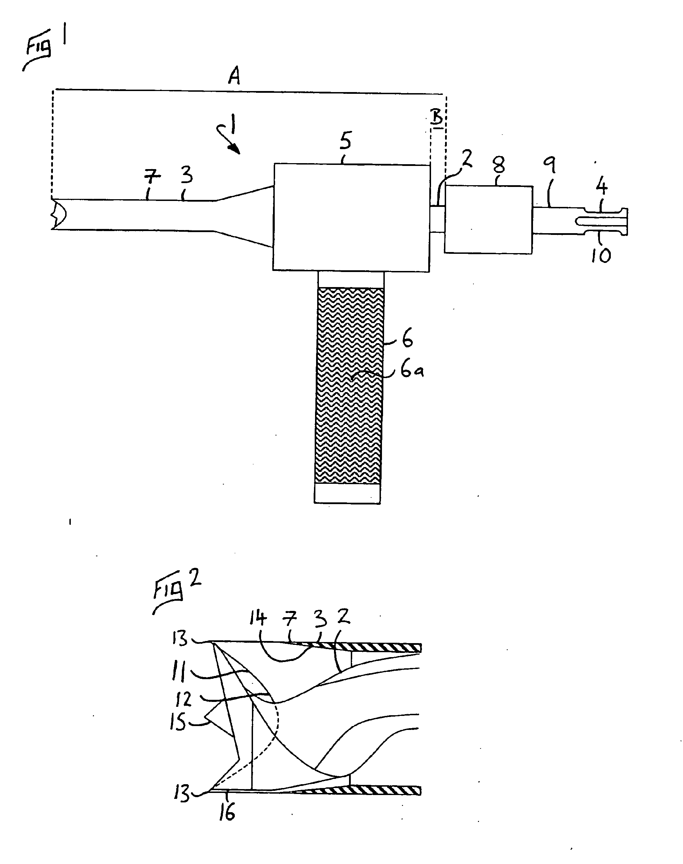

In Figure 1 a mortiser fitting 1 for a motorised drill (not shown), comprises a drill bit a cutting element 3 mounted around the drill bit 2, and attachment means 4 adapted to attach the mortiser fitting 1 to a motorised drill (not shown). In use as described below, the motorised drill (not shown) rotates the drill bit 2 independently of the cutting element 3, and moves the drill bit 2 in a first reciprocating action. The cutting element 3 is axially movable in relation to the drill bit 2, and the drill bit is provided with transmission means, (in the form of body portion 8, and collar section 16, as described below), which are adapted to axially move the cutting element in a second reciprocating action in use, which second reciprocating action is axially non-synchronous with the first reciprocating action.

The cutting element 3 comprises a sleeve made up of a first cylindrical body portion 5, a handle 6 extending radially therefrom, which has a grip surface 6a, and an arm 7 extending axially therefrom, which is in the form of a known type of mortiser chisel. An aperture (not visible) extends through the first body portion 5 and the arm 7. An opening (also not visible) is provided along a portion of the top of the arm 7.

The drill bit 2 comprises an elongate drill bit of an conventional construction, with a second cylindrical body portion 8 at its inner end 9. It is also provided with attachment means 4 in the form of indentations 10 adapted to co-operate with attachment means of the hammer drill (not shown).

(In Figure 2 the cutting element 3 is shown in cross section and the drill bit 2 is shown in full side view. A hashed line represents the outline of the cutting face which is behind the tip of the drill bit 2.) As shown clearly in Figure 2, the cutting face 11 of the cutting element 3 is square in shape, and each side of the square is provided with a recess 12, such that four points 13 (only two of which are visible) are formed by the corners of the square shape. The arm 7 is tapered on its inner surface 14 adjacent the cutting face 11, such that material cut by the four points 13 is forced down the arm 7, eventually to be ejected through the opening (not visible).

The tip 15 of the drill bit 2 comprises a collar section 16, which has a larger radius than the rest of the length of the drill bit 2, and also has a larger radius than the inner dimensions of the arm 7 beyond the tapering section, such that the drill bit 2 cannot recede into the arm 7.

As is clear in Figure 1, the collar section 16 and the second body portion 8, (which comprises the first flange means and the second flange means of the transmission means as described above), are spaced apart by a distance A which is equivalent to the length of the cutting element 3 and a clearance distance B.

In use the drill bit 2 is connected to a hand-held hammer drill (not shown) by means of the attachment means 4. When the hammer drill operates, the drill bit 2 is rotated, and provided with a high-frequency reciprocal action, which forms the first reciprocating action described above. This allows the tip 15 of the drill bit 2 to cut into a subject material (not shown).

As a result of the first reciprocating action applied to the drill bit 2, and the clearance distance B, the cutting element 3 moves in a second reciprocating action which is non-synchronous with the first reciprocation action. The second body portion 8 (the first flange means) strikes the first body portion 5 and moves it forward, then the drill bit 2 moves backward while the cutting element 3 is still moving forward, until the collar 16 (the second flange means) recedes into the arm 7 as far as it can go, and sends the cutting element 3 backward again. It has been found that this arrangement produces an effective cutting action.

When the tip 15 of the drill bit 2 cuts into the subject material, it creates a round hole, and the cut material is sent up the arm 7 and out of the opening (not shown). When the cutting face 11 of the cutting element 3 is driven forward, the points 13 cut around the round hole created by the drill bit 2, and square it off. The pieces of the subject material carved off by the points 13 are forced by the tapering section up into the arm 7, where they are also ejected from the opening (not visible).

In an alternative embodiment (not shown) the mortiser fitting 1 is permanently attached to a hammer drill, and there is no attachment means 4. With this arrangement a single mortiser tool according to the invention is created.

It will be appreciated that the mortiser fitting 1 (or a mortiser tool as described above) can be altered without departing from the spirit of the invention. For example, in one alternative embodiment (not shown) the arm 7 can be removable from the first body portion 5. The arm 7 can be provided with a sleeve which fits into the aperture through the first body portion 5, and which can be held in place by means of a grub screw mounted in an aperture in the first body portion 5. Further, the second body portion 8 and the inner end 9 of the drill bit 2 can be removed from the rest of the drill bit 2 by means of a similar arrangement. With this set-up, the cutting part of the drill bit 2 and the arm 7 can be removed from the rest of the components and replaced with equivalent parts of a smaller or larger size, as desired.

In addition, in one further alternative embodiment (not shown) the drill bit 2 can be mounted inside the cutting element by means of a bearing structure to improve performance.

Thus a mortiser tool is provided which can be used with a hand-held drill, and which effectively creates a square hole by operating a drill bit and mortiser chisel in a new and inventive manner.

## Claims

1. A mortiser tool comprising a drill bit (2), a cutting element (3) mounted around the drill bit (2) and motor means, in which in use the motor means rotates the drill bit (2) independently of the cutting element (3), in which the cutting element (3) is axially movable in relation to the drill bit (2), **characterised in that** in use the motor means moves the drill bit (2) in a first reciprocating action, in which the drill bit (2) is provided with transmission means (8, 16) adapted to axially move the cutting element (3) in a second reciprocating action in use, which second reciprocating action is axially non-synchronous with the first reciprocating action.

2. A mortiser tool as claimed in Claim 1 in which the motor means is a hammer drill, and the drill bit (2) is mounted on the hammer drill such that the first reciprocating action is the reciprocating action of the hammer drill.

3. A mortiser tool as claimed in Claim 2 in which the transmission means (8, 16) comprises first flange means (8) at a first end (9) of the drill bit (2), and second flange (16) means at a second end (15) of the drill bit (2), in which the cutting element (3) is disposed between the first flange means (8) and the second flange means(16), in which the first flange means (8) and the second flange means (16) are spaced apart a distance (A) equivalent to the length of the cutting element (3) and a clearance distance (B), such that, in use, when the drill bit (2) is moved in the first reciprocating action by the hammer drill, the cutting element (3) is struck by the first flange means (8) and the second flange means (16) and moved axially back and forth non-synchronously with the drill bit (2).

4. A mortiser tool as claimed in Claim 3 in which the cutting element (3) comprises a sleeve (5, 7), a handle (6) extending radially from the sleeve (5, 7), and a cutting face (11) at a first end of the sleeve (5,7).

5. A mortiser tool as claimed in Claim 4 in which the sleeve (5, 7) comprises a first body portion (5), from which the handle (6) extends, and a square shaped arm (7) extending axially from the first body portion (5), and which has the cutting face (11) at its end.

6. A mortiser tool as claimed in Claim 5 in which the arm (7) has an opening on at least one side, through which cut material can be ejected from the drill bit (2) in use.

7. A mortiser tool as claimed in Claim 6 in which the first flange means (8) comprises a second body portion (8) mounted on the drill bit (2),

8. A mortiser tool as claimed in Claim 7 in which the second flange means (16) comprises a tip (15) of the drill bit (2), and in which the tip (15) of the drill bit (2) is provided with a larger radius than the inner dimensions of a portion of the arm (7) behind the cutting face (11).

9. A mortiser tool as claimed in Claim 8 in which the first body portion (5) and the second body portion (8) are cylindrical in shape.

10. A mortiser tool as claimed in any of Claims 4 to 9 in which the cutting face (11) is a square shape, in which each side is provided with a recess (12), such that four points (13) are formed by the corners of the square shape.

11. A mortiser tool as claimed in Claim 10 in which the arm (7) is tapered on its inner surface (14) adjacent the cutting face (11), such that material cut by the four points (13) is forced down the arm (7), eventually to be ejected through the opening.

12. A mortiser tool as claimed in any of Claims 2 to 11 in which the hammer drill is a hand-held hammer drill.

13. A mortiser fitting (1) for a motorised drill, comprising a drill bit (2), a cutting element(3) mounted around the drill bit (2) and attachment means (4) adapted to attach the mortiser fitting (1) to a motorised hammer drill,
in which the drill bit (2) is rotatable independently of the cutting element (3) by a motorised hammer drill,
in which the drill bit (2) is movable in a first reciprocating action by the reciprocating action of a motorised hammer drill,
in which the cutting element (3) is axially movable in relation to the drill bit,
in which the drill bit (2) is provided with transmission means (8, 16) adapted to axially move the cutting element (3) in a second reciprocating action, **characterised in that**:
the transmission means (8, 16) comprises first flange means (8) at a first end (9) of the drill bit (2), and second flange means (16) at a second end (15) of the drill bit (2), in which the cutting element (3) is disposed between the first flange means (8) and the second flange means (16), in which the first flange means (8) and the second flange means (16) are spaced apart a distance (A) equivalent to the length of the cutting element (3) and a clearance distance (B), such that when the drill bit (2) is moved in the first reciprocating action by a motorised hammer drill, the cutting element (3) is struck by the first flange means (8) and the second flange means (16) and moved axially back and forth non-synchronously with the drill bit (2).

## Patentansprüche

1. Zapfenlochwerkzeug mit einer Bohrspitze (2), einem um die Bohrspitze (2) montierten Schneidelement (3) und Motormitteln, wobei bei Benutzung die Motormittel die Schneidspitze (2) unabhängig von dem Schneidelement (3) drehen und das Schneidelement (3) im Verhältnis zu der Bohrspitze (2) axial bewegbar ist,
**dadurch gekennzeichnet,**
**dass** bei Benutzung die Motormittel die Bohrspitze (2) in einer ersten reziproken Bewegung bewegen, wobei die Bohrspitze (2) mit Übertragungsmitteln (8, 16) versehen ist, die dazu eingerichtet sind, das Schneidelement (3) bei Benutzung in einer zweiten reziproken Bewegung zu bewegen, und die zweite reziproke Bewegung axial nicht synchron mit der ersten reziproken Bewegung ist.

2. Zapfenlochwerkzeug nach Anspruch 1,
bei dem die Motormittel ein Hammerbohrer sind und die Bohrspitze (2) an dem Hammerbohrer so montiert ist, dass die erste reziproke Bewegung die reziproke Bewegung des Hammerbohrers ist.

3. Zapfenlochwerkzeug nach Anspruch 2,
bei dem die Übertragungsmittel (8, 16) erste Flanschmittel (8) an einem ersten Ende (9) der Bohrspitze (2) und zweite Flanschmittel (16) an einem zweiten Ende (15) der Bohrspitze (2) aufweisen, wobei das Schneidelement (3) zwischen den ersten Flanschmitteln (8) und zweiten Flanschmitteln (16) angeordnet ist und die ersten Flanschmittel (8) und zweiten Flanschmittel (16) in einem Abstand (A) entsprechend der Länge des Schneidelements (3) und eines Leerwegs (B) getrennt so angeordnet sind, dass bei Benutzung, wenn die Bohrspitze in der ersten reziproken Bewegung durch den Hammerbohrer bewegt wird, das Schneidelement (3) an den ersten Flanschmitteln (8) und den zweiten Flanschmitteln (16) angeschlagen wird und axial nicht synchron mit der Bohrspitze (2) zurück und vorwärts bewegt wird.

4. Zapfenlochwerkzeug nach Anspruch 3,
bei dem das Schneidelement (3) eine Hülse (5, 7), einen sich radial von der Hülse (5, 7) erstreckenden Handgriff (6) und eine Schneidfläche (11) an einem ersten Ende der Hülse (5, 7) aufweist.

5. Zapfenlochwerkzeug nach Anspruch 4,
bei dem die Hülse (5, 7) einen ersten Gehäuseabschnitt (5), von dem sich der Handgriff (6) erstreckt, und einen quadratförmigen Arm (7) aufweist, der sich axial von dem ersten Gehäuseabschnitt (5) erstreckt und der die Schneidfläche (11) an seinem Ende aufweist.

6. Zapfenlochwerkzeug nach Anspruch 5,
bei dem der Arm (7) eine Öffnung an zumindest einer Seite aufweist, durch die bei Benutzung Spanmaterial von der Schneidspitze (2) ausgeworfen werden kann.

7. Zapfenlochwerkzeug nach Anspruch 6,
bei dem die ersten Flanschmittel (8) einen zweiten an der Bohrspitze (2) montierten Gehäuseabschnitt (8) aufweisen.

8. Zapfenlochwerkzeug nach Anspruch 7,
bei dem die zweiten Flanschmittel eine Spitze (15) der Bohrspitze (2) aufweisen und bei dem die Spitze (15) der Bohrspitze (2) mit einem größeren Radius als die Innenabmessungen des Arms (7) hinter der Schneifläche (11) versehen ist.

9. Zapfenlochwerkzeug nach Anspruch 8,
bei dem der erste Gehäuseabschnitt (5) und der zweite Gehäuseabschnitt (8) in ihrer Form zylindrisch sind.

10. Zapfenlochwerkzeug nach einem der Ansprüche 4 bis 9,
bei dem die Schneidfläche (11) eine quadratische Gestalt hat, bei der jede Seite mit einem Rücksprung (12) versehen ist, so dass vier Punkte (13) durch die Ecken der quadratischen Form gebildet werden.

11. Zapfenlochwerkzeug nach Anspruch 10,
bei dem der Arm (7) an seiner an die Schneidfläche (11) anliegenden Innenfläche (14) konisch ist, so dass das durch die vier Punkte (13) geschnittene Material den Arm (7) abwärts gedrückt wird, um letztlich durch die Öffnung ausgeworfen zu werden.

12. Zapfenlochwerkzeug nach einem der Ansprüche 2 bis 11,
bei dem der Hammerbohrer ein tragbarer Hammerbohrer ist.

13. Zapflochaufsatz (1) für einen motorbetriebenen Bohrer mit
einer Bohrspitze (2), einem um die Bohrspitze (2) montierten Schneidelement (3) und Haltemitteln (4), um den Zapflochaufsatz (1) an einem motorbetriebenen Hammerbohrer anzubringen,
bei dem die Schneidspitze (2) unabhängig von dem Schneidelement (3) durch den motorbetriebenen Hammerbohrer drehbar,
bei dem das Schneidelement (3) im Verhältnis zu der Bohrspitze (2) axial bewegbar und
bei dem die Bohrspitze (2) mit Übertragungsmitteln (8, 16) versehen ist, die dazu eingerichtet sind, das Schneidelement (3) bei Benutzung in einer zweiten reziproken Bewegung zu bewegen,
**dadurch gekennzeichnet,**
**dass** die Übertragungsmittel(8, 16) erste Flanschmittel (8) an einem ersten Ende (9) der Bohrspitze (2) und zweite Flanschmittel (16) an einem zweiten Ende (15) der Bohrspitze (2) aufweisen, wobei das Schneidelement (3) zwischen den ersten Flanschmitteln (8) und zweiten Flanschmitteln (16) angeordnet ist und die ersten Flanschmittel (8) und zweiten Flanschmittel (16) in einem Abstand (A), entsprechend der Länge des Schneidelements (3) und eines Leerwegs (B) getrennt so angeordnet sind, dass, wenn die Bohrspitze in der ersten reziproken Bewegung durch den Hammerbohrer bewegt wird, das Schneidelement (3) an den ersten Flanschmitteln (8) und den zweiten Flanschmitteln (16) angeschlagen wird und axial nicht synchron mit der Bohrspitze (2) zurück und vorwärts bewegt wird.

## Revendications

1. Mortaiseuse comprenant un foret (2), un élément de coupe (3) monté autour du foret (2) et un moyen moteur, dans laquelle, lors de l'utilisation, le moteur fait tourner le foret (2) indépendamment de l'élément de coupe (3), dans laquelle l'élément de coupe (3) est axialement mobile par rapport au foret (2), **caractérisée en ce que**, lors de l'utilisation, le moteur déplace le foret (2) selon un premier mouvement de va-et-vient, le foret (2) étant muni d'un moyen de transmission (8, 16) adapté pour déplacer axialement l'élément de coupe (3) selon un second mouvement de va-et-vient lors de l'utilisation, ledit second mouvement de va-et-vient étant axialement non synchrone avec le premier mouvement de va-et-vient.

2. Mortaiseuse selon la revendication 1, dans laquelle le moyen moteur est un marteau perforateur, et le foret (2) est monté sur le marteau perforateur de telle sorte que le premier mouvement de va-et-vient soit le mouvement de va-et-vient du marteau perforateur.

3. Mortaiseuse selon la revendication 2, dans laquelle le moyen de transmission (8, 16) comprend un premier moyen de bride (8) à une première extrémité (9) du foret (2), et un second moyen de bride (16) à une seconde extrémité (15) du foret (2), dans laquelle l'élément de coupe (3) est disposé entre le premier moyen de bride (8) et le second moyen de bride (16), dans laquelle le premier moyen de bride (8) et le second moyen de bride (16) sont espacés d'une distance (A) équivalente à la longueur de l'élément de coupe (3) et à une distance de dégagement (B), de telle sorte que, lors de l'utilisation, lorsque le foret (2) est déplacé selon le premier mouvement de va-et-vient par le marteau perforateur, l'élément de coupe (3) est raclé par le premier moyen de bride (8) et le second moyen de bride (16) et déplacé axialement vers l'arrière et vers l'avant de manière non synchrone avec le foret (2).

4. Mortaiseuse selon la revendication 3, dans laquelle l'élément de coupe (3) comprend un manchon (5, 7), une poignée (6) s'étendant radialement depuis le manchon (5, 7), et une face de coupe (11) à une première extrémité du manchon (5, 7).

5. Mortaiseuse selon la revendication 4, dans laquelle le manchon (5, 7) comprend une première partie de corps (5), à partir de laquelle la poignée (6) s'étend, et un bras de forme carrée (7) s'étendant axialement depuis la première partie de corps (5), et qui possède la face de coupe (11) en son extrémité.

6. Mortaiseuse selon la revendication 5, dans laquelle le bras (7) possède une ouverture sur au moins un côté, par laquelle le matériau coupé peut être éjecté du foret (2) lors de l'utilisation.

7. Mortaiseuse selon la revendication 6, dans laquelle le premier moyen de bride (8) comprend une seconde partie de corps (8) montée sur le foret (2).

8. Mortaiseuse selon la revendication 7, dans laquelle le second moyen de bride (16) comprend une pointe (15) du foret (2), et dans laquelle la pointe (15) du foret (2) présente un rayon supérieur aux dimensions internes d'une partie du bras (7) située derrière la face de coupe (11).

9. Mortaiseuse selon la revendication 8, dans laquelle la première partie de corps (5) et la seconde partie de corps (8) sont de forme cylindrique.

10. Mortaiseuse selon l'une quelconque des revendications 4 à 9, dans laquelle la face de coupe (11) est de forme carrée, dans laquelle chaque côté est muni d'un renfoncement (12), de telle sorte que quatre points (13) soient formés par les angles de la forme carrée.

11. Mortaiseuse selon la revendication 10, dans laquelle le bras (7) est effilé sur sa surface interne (14) adjacente à la face de coupe (11), de telle sorte que le matériau coupé par les quatre points (13) soit forcé vers le bas du bras (7), éventuellement de façon à être éjecté par l'ouverture.

12. Mortaiseuse selon l'une quelconque des revendications 2 à 11, dans laquelle le marteau perforateur est un marteau perforateur portatif.

13. Accessoire de mortaiseuse (1) destiné à un foret motorisé, comprenant un foret (2), un élément de coupe (3) monté autour du foret (2) et un moyen de raccordement (4) adapté pour relier l'accessoire de mortaiseuse (1) à un marteau perforateur motorisé,
dans lequel le foret (2) peut tourner indépendamment de l'élément de coupe (3) grâce à un marteau perforateur motorisé,
dans lequel le foret (2) est mobile selon un premier mouvement de va-et-vient à l'aide du mouvement de va-et-vient d'un marteau perforateur motorisé,
dans lequel l'élément de coupe (3) est axialement mobile par rapport au foret,
dans lequel le foret (2) est muni d'un moyen de transmission (8, 16) adapté afin de déplacer axialement l'élément de coupe (3) selon un second mouvement de va-et-vient, **caractérisé en ce que** :
le moyen de transmission (8, 16) comprend un premier moyen de bride (8) à une première extrémité (9) du foret (2), et un second moyen de bride (16) à une seconde extrémité (15) du foret (2), l'élément de coupe (3) étant disposé entre le premier moyen de bride (8) et le second moyen de bride (16), le premier moyen de bride (8) et le second moyen de bride (16) étant espacés selon une distance (A) équivalente à la longueur de l'élément de coupe (3) et à une distance de dégagement (B), de telle sorte que le foret (2) soit déplacé selon le premier mouvement de va-et-vient par un marteau perforateur motorisé, et l'élément de coupe (3) est raclé par le premier moyen de bride (8) et le second moyen de bride (16) et est déplacé axialement vers l'arrière et vers l'avant de manière non synchrone avec le foret (2).
